# EUROPEAN PATENT APPLICATION

(11) **EP 4 603 323 A1**
(43) Date of publication of application: **20.08.2025**
(21) Application number: 24157511.7
(22) Date of filing: 14.02.2024
(51) Int. Cl.: B60L 53/63, B60L 55/00, H02J 3/32, H02J 7/00

(54) **A METHOD FOR CONTROLLING TRANSMISSION OF POWER**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: LEGNEDAHL, Niklas, 43936 ONSALA (SE); FREJINGER, Petter, 42834 KÅLLERED (SE)
(74) Representative: Zacco Sweden AB

(57) **Abstract**

The invention relates to a method controlling transmission of power between an electrical grid (3) and a fleet of electric vehicles (1). The vehicles of the fleet are used for balancing the electrical grid, wherein each vehicle (1) has an electric energy storage (2), and power can be transferred between the electrical grid (3) and the electric energy storages (2). The method comprises, before balancing power is requested, identifying vehicles (1) of the vehicle fleet which are connected to the electrical grid (3) and bringing each identified vehicle in a low power transmission mode wherein power is transferred between the electrical grid (3) and the electric energy storage (2), maintaining each identified vehicle (1) in the low power transmission mode, and, when a signal (8) requesting balancing power is received, increasing the power transferred between the electrical grid (3) and the identified vehicles (1) so as to provide the balancing power requested.

## Description

### TECHNICAL FIELD

The invention relates to a method and a control unit for controlling transmission of power between an electrical grid and a fleet of electric vehicles.

### BACKGROUND

Today's flexibility markets for electricity often use services like aFRR (automatic Frequency Restoration Reserve) and mFRR (manual Frequency Restoration Reserve), FCR-D (Frequency Containment Reserve - Disturbance) upwards and downwards and FCR-N (Frequency Containment Reserve - Normal), for balancing or stabilizing the operating frequency of an electrical grid.

In case balancing power is requested, the power being transferred between the electrical grid and a user connected to the electrical grid has to be immediately changed. During a relatively short period of time, balancing power is provided for contributing to the balancing of the operating frequency of the electrical grid. Depending on the type of service, this may involve that power transmission from the electrical grid to the user is stopped or the power transferred is decreased.

When utilizing a vehicle fleet for contributing to balancing an electrical grid, a plurality of vehicles and most often many vehicles connected to chargers have to be used to reach the requisite change of power.

The response time of the vehicle fleet as a whole will however be dependent on individual chargers and vehicles connected to the chargers, which results in relatively long response times. If the response time is too long, the vehicle fleet may not be able to provide the power transmission at the requested time point that is required for fulfilling the balancing service.

### SUMMARY

An objective of the invention is to provide a method for controlling transmission of power between an electrical grid and a fleet of electric vehicles, by which method it can be secured that such a vehicle fleet can fulfil the requested balancing service for the electrical grid.

The objective is achieved by a method for controlling transmission of power between an electrical grid and a fleet of electric vehicles, wherein the vehicles of the fleet are used for balancing the electrical grid, and wherein each vehicle has an electric energy storage, and power can be transferred between the electrical grid and the electric energy storages, wherein the method comprises, before balancing power is requested, identifying vehicles of the vehicle fleet which are connected to the electrical grid and bringing each identified vehicle in a low power transmission mode wherein power is transferred between the electrical grid and the electric energy storage, maintaining each identified vehicle in the low power transmission mode, and, when a signal requesting balancing power is received, increasing the power transferred between the electrical grid and the identified vehicles so as to provide the balancing power requested.

The invention is based on the insight that by such a method, the response time can be significantly reduced, and thereby the utility of a vehicle fleet in a balancing service for electricity can be improved.

According to one embodiment, the method comprises charging the identified vehicles in the low power transmission mode by transferring power from the electrical grid to the electric energy storages. Hereby, the reactivity to a balancing power request will not be affected by latencies associated with setting up the power transmission, but the response time will be closer to the physical limit of a charger to increase power.

According to a further embodiment, the method comprises discharging the identified vehicles in the low power transmission mode by transferring power from the electric energy storages to the electrical grid. Hereby, the reactivity to a balancing power request will not be affected by latencies associated with setting up the power transmission, but the response time will be closer to the physical limit of a charger to increase power.

According to a further embodiment, the method comprises, when balancing power is requested, bringing each identified vehicle in a high power transmission mode, wherein the power transferred between the electrical grid and each identified vehicle is higher in the high power transmission mode than in the low power transmission mode. Hereby, the change in power can be achieved in rational way enabling the identified vehicles to participate when increased power transmission is required for fulfilling the service requested.

According to a further embodiment, the method comprises charging the identified vehicles in the high power transmission mode by transferring power from the electrical grid to the electric energy storages. Hereby, the energy storing capacity of the electric energy storage of each identified vehicle can be utilised for fulfilling the service request.

According to a further embodiment, the method comprises discharging the identified vehicles in the high power transmission mode by transferring power from the electric energy storages to the electrical grid. Hereby, energy stored in the electric energy storage of each identified vehicle can be utilised for fulfilling the service request.

According to a further embodiment, the method comprises controlling the increase of power transferred between the electrical grid and the identified vehicles by sending a power transmission request to a charger of each identified vehicle. Hereby, the power can be increased in accordance with the balancing power request in a safe and rational way.

According to a further embodiment, the method comprises for each identified vehicle, recording the power transferred between the electrical grid and the identified vehicle during a balancing power delivery period. Hereby, the service that has been performed can be documented and reported.

The invention also relates to a control unit for controlling transmission of power between an electrical grid and a fleet of electric vehicles, wherein the vehicles of the fleet are used for balancing the electrical grid, wherein each vehicle has an electric energy storage, and power can be transferred between the electrical grid and the electric energy storages, wherein the control unit is configured to, before balancing power is requested, identify vehicles of the vehicle fleet which are connected to the electrical grid and bring each identified vehicle in a low power transmission mode wherein power is transferred between the electrical grid and the electric energy storage, and control each identified vehicle to be maintained in the low power transmission mode, and, when a signal requesting balancing power is received, control the power transferred between the electrical grid and the identified vehicles to be increased so as to provide the balancing power requested.

The advantages of the control unit are similar to the advantages already discussed hereinabove with reference to the different embodiments of the method.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1A is a schematic view showing a vehicle fleet connected to an electrical grid, wherein N vehicles are brought into a low power transmission mode,
Fig. 1B is the vehicle fleet illustrated in Fig. 1A, wherein the N vehicles are brought into a high power transmission mode,
Fig. 2A is a diagram showing a grid frequency of an electrical grid as a function of time, and
Fig. 2B is a diagram showing the power transferred between the electrical grid and the N vehicles of the vehicle fleet as a function of time.

### DETAILED DESCRIPTION OF EXAMPLE EMBODIMENTS

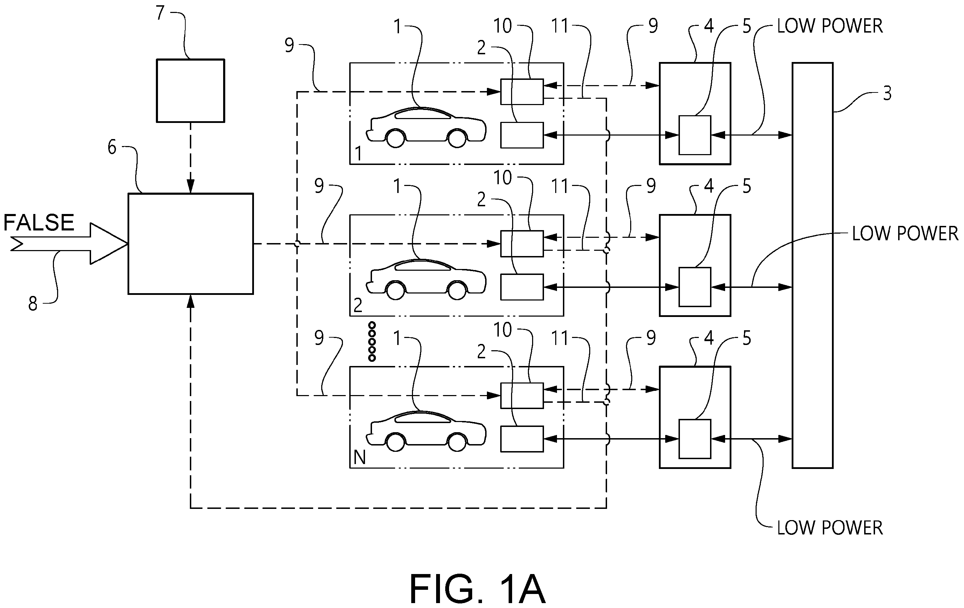

Fig. 1A is a schematical illustration of a vehicle fleet comprising a plurality of electric vehicles which are electrically connected to an electrical grid. Such a vehicle fleet can include a lot of vehicles, for example from a few vehicles up to thousands of vehicles, often from a few tens of up to hundreds of vehicles. The vehicle fleet can vary in size to match the service power request. The vehicles have to be connected to the electrical grid in the region where the service applies.

Each vehicle 1 has an electric energy storage 2, such as an electric battery. For illustration purposes only, the electric energy storage 2 is shown outside the vehicle 1 though it should be arranged onboard the vehicle 1. The electric energy storage 2 can be charged by the electrical grid 3 when the vehicle 1 is electrically connected to a charging station 4 which in turn is electrically connected to the electrical grid 3.

The vehicles 1 of the vehicle fleet are also used for balancing the electrical grid 3 by participating in a flexibility market for electricity. This means that a predetermined amount of power has to be transferred between the electrical grid 3 and the electric energy storages 2 during a certain time period when balancing power is requested. The request is usually received from the operator of the electrical grid 3 for balancing or stabilizing the operating frequency of the electrical grid 3.

The fact that power can be transferred between the electrical grid 3 and the electric energy storages 2 means that power can be transferred from the electrical grid 3 to the electric energy storages 2, or, from the electrical grid 3 to the electric energy storages 2 and from the electric energy storages 2 to the electrical grid 3.

The electric energy storage 2 of each vehicle 1 is suitably connected to the electrical grid 3 via a charger 5. The charger 5 can be arranged on the vehicle 1 or be arranged as a part of the charging station 4 to which the vehicle 1 is electrically connected.

A control unit 6 can be used for controlling the power transferred from the electrical grid 3 to the electric energy storages 2 or from the electric energy storages 2 to the electrical grid 3 where applicable.

In Fig. 1A, the transmission of power between the electrical grid 3 and the electric energy storages 2 is illustrated by solid lines, whereas the communication by control signals between different components is illustrated by dashed lines.

The control unit 6 receives an external power request 7 determining the power to be transferred between the electrical grid 3 and the electric energy storages 2, or rather the change in power transmission between the electrical grid 3 and the electric energy storages 2 that is required, when balancing power is requested. A trigger signal 8 activates and deactivates the balancing power delivery period. When the trigger signal 8 is "FALSE", as in Fig. 1A, no balancing power is requested. The control unit 6 provides a power control signal 9 to each vehicle 1 for controlling the power transferred between the electrical grid 3 and the electric energy storages 2. Such a control signal 9 is suitably provided from the control unit 6 to the charging station 4 for controlling the charger 5, for example via a local control unit 10 of the vehicle 1. From each vehicle 1, a feedback signal 11 indicating the current power transferred between the electrical grid 3 and the electric energy storages 2 is received by the control unit 6. Further, additional control signals can be transferred between each vehicle 1 and the respective charging station 4.

The control unit 6 may comprise one or more microprocessors and/or one or more memory devices or any other components for executing computer programs or receiving and/or sending control signals for providing the control functions. Particularly, the control unit 6 is preferably provided with a computer program comprising program code means for performing all steps of any embodiment of the method described herein. The control unit can be a central control unit 6 which may communicate with the local control units 10 of the vehicles 1.

The control functions of the control unit 6 can be provided by cloud computing, i.e., IT services provided over the Internet or similar.

The control unit 6 is configured to, before balancing power is requested, identify vehicles 1 of the vehicle fleet which are connected to the electrical grid 3 and bring each identified vehicle 1 in a low power transmission mode wherein power is transferred between the electrical grid and the electric energy storage. The number of these vehicles 1 can be from approximately a few up to all of the vehicles of the vehicle fleet. In Fig. 1A, a number of N identified vehicles 1 have been brought into the low power transmission mode. Other vehicles of the vehicle fleet not brought into the low power transmission mode are not shown.

The control unit 6 is further configured to control each identified vehicle 1 to be maintained in the low power transmission mode, and, when a signal requesting balancing power is received, i.e., the trigger signal 8 is "TRUE", to control the power transferred between the electrical grid 3 and the identified vehicles 1 to be increased so as to provide the balancing power requested. When the trigger signal 8 is "TRUE", the external power request 7 can be updated to indicate the change in power required.

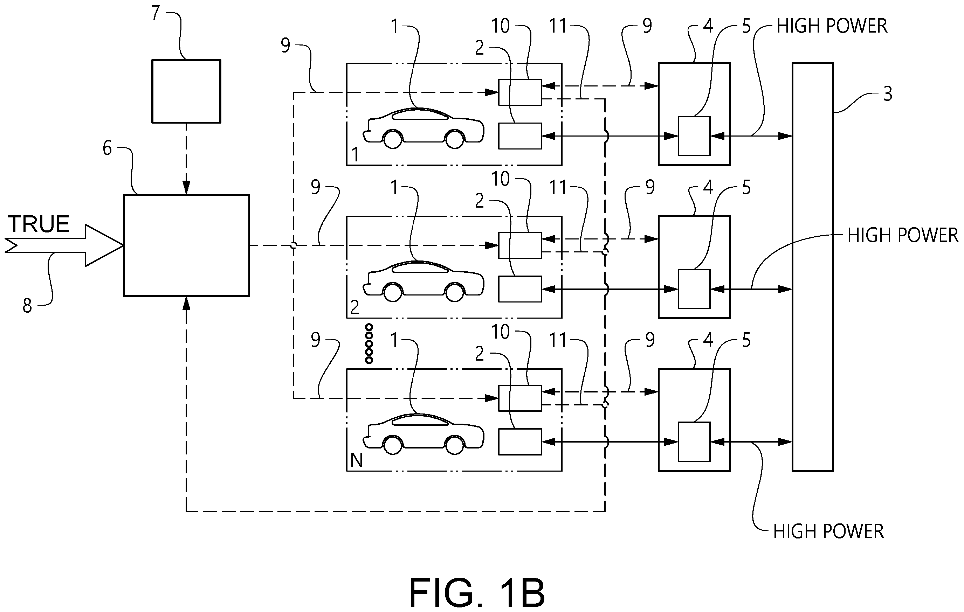

Fig. 1B shows the vehicle fleet comprising the plurality of vehicles 1 which are electrically connected to the electrical grid 3 when the vehicles 1 provide the balancing power that is requested during a balancing power delivery period.

To provide the balancing power, the power transferred between the electrical grid 3 and the identified vehicles 1 is increased, preferably from the low power transmission mode to a high power transmission mode of each identified vehicle 1. The balancing power is then the difference between the power transferred at the high power transmission mode and the power transferred at the low power transmission mode, for each vehicle, multiplied with the number of vehicles.

During low power transmission mode, the power transferred is preferably as low as possible. Due to the characteristics of the system including the chargers 5, it is only possible to decrease the electric current and power to a minimum value which is greater than zero while charging the electric energy storages 2. As an example only, the low power transmission mode may involve charging of each electric energy storage 2 by 5-10% of the rated power of each charger 5 which means that up to 90-95% of the rated power of the charger 5 can potentially be used for the balancing power. The power transferred between the electrical grid 3 and the identified vehicles 1, is higher in the high power transmission mode than in the low power transmission mode. During a balancing power delivery period, the high power transmission mode involves charging of the electric energy storages 2 by various power depending on the balancing power requested, and up to a maximal value of 100% of the rated power of the chargers 5.

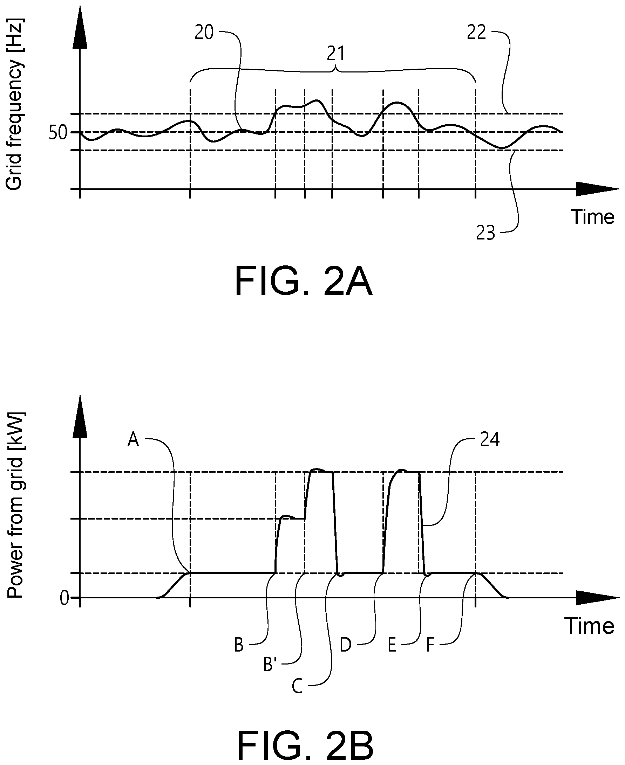

Fig. 2A shows a grid frequency of the electrical grid 3 as a function of time. The diagram showing an example of a frequency curve 20 includes a time period 21 where the vehicle fleet is committed to provide balancing power if requested. This time period 21 can be for example one hour. The optimal grid frequency is for example 50 Hz, and there is an upper frequency limit 22 and a lower frequency limit 23.

Fig. 2B shows power transferred from the electrical grid 3 to the electric energy storages 2 of the vehicles 1 of the vehicle fleet as a function of time for the same time period as the frequency curve diagram. This diagram shows an example of a power curve 24 providing down service for balancing the operating frequency of the electrical grid 3.

Reference is made to Figs. 1A, 1B, 2A and 2B, for illustrating an example embodiment of the method.

The method comprises before balancing power is requested, identifying vehicles 1 of the vehicle fleet which are connected to the electrical grid 3 and bringing each identified vehicle 1 in a low power transmission mode wherein power is transferred between the electrical grid 3 and the electric energy storage, maintaining each identified vehicle 1 in the low power transmission mode, and, when a signal 8 requesting balancing power is received, increasing the power transferred between the electrical grid 3 and the identified vehicles 1 so as to provide the balancing power requested.

The method suitably comprises controlling the increase of the power transferred between the electrical grid 3 and the identified vehicles 1 by sending a power transmission request 9 to a charger 5 of each identified vehicle 1.

As appears from Fig. 2B, up to a time A when the balancing power delivery period starts, the vehicles 1 may not be connected to the electrical grid 3, and from this time A to a time B where the grid frequency is increasing, the vehicles 1 are electrically connected to the electrical grid 3 and maintained in the low power transmission mode.

In the example embodiment illustrated in Figs. 2A and 2B, the method comprises charging the identified vehicles in the low power transmission mode by transferring power from the electrical grid 3 to the electric energy storages 2.

At the time B where the grid frequency is increasing, the trigger signal 8 becomes "TRUE" and the power transferred between the electrical grid 3 and the identified vehicles 1 is increased so as to provide the balancing power requested for lowering the frequency to be within the desired frequency interval. When balancing power is requested, the method comprises bringing each identified vehicle 1 in a high power transmission mode, wherein the power transferred between the electrical grid 3 and each identified vehicle 1 is higher in the high power transmission mode than in the low power transmission mode. In the high power transmission mode, the identified vehicles 1 are charged by transferring power from the electrical grid 3 to the electric energy storages 2.

The balancing power is delivered during a period from the time indicated by B to a time C where the grid frequency is decreasing and no balancing power is requested. In other words; the trigger signal 8 becomes "FALSE" at time C and the identified vehicles 1 are brought into and maintained in the low power transmission mode again.

As appears from Fig. 2B, the balancing power requested can vary depending on the need of balancing power. During a time period between the time B and a time B', the balancing power is lower than during a time period between the time B' and the time C.

Then, at a time D, where the grid frequency is increasing, the trigger signal 8 becomes "TRUE" again and the power transferred between the electrical grid 3 and the identified vehicles 1 is increased to provide the balancing power requested for lowering the frequency to be within the desired frequency interval. In other words; at the time indicated by D, the identified vehicles are brought from the low power transmission mode into the high power transmission mode again.

The balancing power is delivered during a period from the time indicated by D to a time E where the grid frequency is decreasing and no balancing power is requested. In other words; the trigger signal 8 becomes "FALSE" at time E and the identified vehicles 1 are brought into and maintained in the low power transmission mode again.

At a time F when the time period 21 is finished and the vehicle fleet is no longer committed to provide balancing power, the identified vehicles 1 can be disconnected from the electrical grid 3 and no power is transferred between the electrical grid 3 and the identified vehicles 1.

During the time period 21 where the vehicle fleet is committed to provide balancing power if requested, the method suitably comprises, for each identified vehicle 1, recording the power transferred between the electrical grid 3 and the identified vehicle 1 during the balancing power delivery periods.

Although not shown in the figures, alternatively, the method could comprise discharging the identified vehicles in the low power transmission mode by transferring power from the electric energy storages to the electrical grid, and discharging the identified vehicles in the high power transmission mode by transferring power from the electric energy storages to the electrical grid. In this way, by increasing the power transferred from the electric energy storages to the electrical grid from the low power transmission mode to the high power transmission mode, an up service instead of a down service for balancing the operating frequency of the electrical grid can be provided.

It is to be understood that the present invention is not limited to the embodiments described above and illustrated in the drawings; rather, the skilled person will recognize that many changes and modifications may be made within the scope of the appended claims.

## Claims

1. A method for controlling transmission of power between an electrical grid (3) and a fleet of electric vehicles (1), the vehicles of the fleet being used for balancing the electrical grid, wherein each vehicle (1) has an electric energy storage (2), and power can be transferred between the electrical grid (3) and the electric energy storages (2), **characterized by** before balancing power is requested, identifying vehicles (1) of the vehicle fleet which are connected to the electrical grid (3) and bringing each identified vehicle in a low power transmission mode wherein power is transferred between the electrical grid (3) and the electric energy storage (2), maintaining each identified vehicle (1) in the low power transmission mode, and, when a signal (8) requesting balancing power is received, increasing the power transferred between the electrical grid (3) and the identified vehicles (1) so as to provide the balancing power requested.

2. A method according to claim 1, **characterized by** charging the identified vehicles (1) in the low power transmission mode by transferring power from the electrical grid (3) to the electric energy storages (2).

3. A method according to claim 1, **characterized by** discharging the identified vehicles (1) in the low power transmission mode by transferring power from the electric energy storages (2) to the electrical grid (3).

4. A method according to any of claims 1-3, **characterized by** when balancing power is requested, bringing each identified vehicle (1) in a high power transmission mode, wherein the power transferred between the electrical grid (3) and each identified vehicle (1) is higher in the high power transmission mode than in the low power transmission mode.

5. A method according to claim 4, **characterized by** charging the identified vehicles (1) in the high power transmission mode by transferring power from the electrical grid (3) to the electric energy storages (2).

6. A method according to claim 4, **characterized by** discharging the identified vehicles (1) in the high power transmission mode by transferring power from the electric energy storages (2) to the electrical grid (3).

7. A method according to any preceding claim, **characterized by** controlling the increase of power transferred between the electrical grid (3) and the identified vehicles (1) by sending a power transmission request to a charger (5) of each identified vehicle.

8. A method according to any preceding claim, **characterized by** for each identified vehicle (1), recording the power transferred between the electrical grid (3) and the identified vehicle during a balancing power delivery period.

9. A control unit (6) for controlling transmission of power between an electrical grid (3) and a fleet of electric vehicles (1), the vehicles of the fleet being used for balancing the electrical grid, wherein each vehicle (1) has an electric energy storage (2), and power can be transferred between the electrical grid (3) and the electric energy storages (2), **characterized in that** the control unit (6) is configured to, before balancing power is requested, identify vehicles (1) of the vehicle fleet which are connected to the electrical grid (3) and bring each identified vehicle in a low power transmission mode wherein power is transferred between the electrical grid (3) and the electric energy storage (2), and control each identified vehicle (1) to be maintained in the low power transmission mode, and, when a signal (8) requesting balancing power is received, control the power transferred between the electrical grid (3) and the identified vehicles (1) to be increased so as to provide the balancing power requested.

10. A control unit according to claim 9, **characterized in that** the control unit (6) is configured to control the identified vehicles (1) in the low power transmission mode to be charged by transferring power from the electrical grid (3) to the electric energy storages (2).

11. A control unit according to claim 9, **characterized in that** the control unit (6) is configured to control the identified vehicles (1) in the low power transmission mode to be discharged by transferring power from the electric energy storages (2) to the electrical grid (3).

12. A control unit according to any of claims 9-11, **characterized in that** when balancing power is requested, the control unit (6) is configured to bring each identified vehicle (1) in a high power transmission mode, wherein the power transferred between the electrical grid (3) and each identified vehicle (1) is higher in the high power transmission mode than in the low power transmission mode.

13. A control unit according to claim 12, **characterized in that** the control unit (6) is configured to control the identified vehicles (1) in the high power transmission mode to be charged by transferring power from the electrical grid (3) to the electric energy storages (2).

14. A control unit according to claim 12, **characterized in that** the control unit (6) is configured to control the identified vehicles (1) in the high power transmission mode to be discharged by transferring power from the electric energy storages (2) to the electrical grid (3).

15. A control unit according to any of claims 9-14, **characterized in that** the control unit (6) is configured to send a power transmission request to a charger (5) of each identified vehicle (1) for controlling the increase of power transferred between the electrical grid (3) and the identified vehicles (1).

16. A control unit according to any of claims 9-15, **characterized in that** the control unit (6) is configured to, for each identified vehicle (1), record the power transferred between the electrical grid (3) and the identified vehicle (1) during a balancing power delivery period.

17. A computer program comprising program code means for performing a method according to any of claims 1-8.
